# EUROPÄISCHE PATENTSCHRIFT

(11) **EP 0 560 183 B1**
(45) Veröffentlichungstag und Bekanntmachung des Hinweises auf die Patenterteilung: **26.11.1997**
(21) Anmeldenummer: 93103342.7
(22) Anmeldetag: 03.03.1993
(51) Int. Cl.: A61C 13/265

(54) **Geschiebepassung mit Scharnierbewegung**
Hinged sliding attachment
Attache coulissante à charnière

(30) Priorität: 09.03.1992 DE 4207397
(43) Veröffentlichungstag der Anmeldung: 15.09.1993
(73) Patentinhaber: Wieland Edelmetalle GmbH & Co., 75179 Pforzheim (DE)
(72) Erfinder: Gerke, Klaus, W-3167 Burgdorf (DE); Kröly, Helmut, W-3000 Hannover 51 (DE)
(74) Vertreter: Patentanwälte Ruff, Beier, Schöndorf und Mütschele

(56) Entgegenhaltungen:
- DE-A- 1 566 229
- DE-U- 9 205 176
- US-A- 1 485 306
- US-A- 2 808 648
- US-A- 4 196 516

## Beschreibung

Die Erfindung betrifft eine geschlossene Geschiebepassung zur lösbaren Verbindung eines herausnehmbaren Zahnersatzes mit dem Restgebiß zur parodontalen Abstützung, insbesondere zur Verankerung einer Freiendprothese an der Ersatzkrone eines Ankerzahnes, mit einer Matrize und einer in diese einschiebbaren Patrize, wobei die Patrize zur Ausführung begrenzter rückstellbarer Kippbewegungen innerhalb der Matrize federnd ausgebildet ist und durch die Kippbewegung eine rückstellende Federkraft erzeugt.

Eine Vorrichtung, welche die Merkmale des Oberbegriffs von Anspruch 1 aufweist, ist aus der US-A-1 485 306 bekannt.

Zur Verankerung herausnehmbarer Zahnbrücken und partieller Zahnprothesen gelangen lösbare Verbindungen zum Einsatz. Hierzu gehören u. a. feinmechanische Geschiebepassungen. Sie bestehen aus zwei ineinanderfügbaren Konstruktionsteilen mit genormten Maßunterschieden. Das Innenpaßteil wird als Matrize bezeichnet und ist üblicherweise an der Ersatzkrone eines Ankerzahnes befestigt. Das Außenpaßteil hält das Prothesenteil und wird als Patrize bezeichnet. Die durch das Geschiebe zwischen dem Zahnersatz und dem Restgebiß hergestellte Verbindung kann starr oder elastisch sein. Aus physiologischen Gründen werden starre Verbindungen durch Parallelpassungen zur Übertragung weitgehend axialer Belastungen für den tragenden Ankerzahn angestrebt, was durch ein geschlossenes Geschiebe mit über die gesamte Einschublänge parallel verlaufenden Paßflächen erreichbar ist. Der Einschubweg der Patrize wird durch einen festen Tiefenanschlag, das ist meist der Boden der Matrize, begrenzt. Hierdurch wird die starre Verbindung zwischen der Prothese und dem Restgebiß ermöglicht, mit der nicht nur Kippungen und Verdrehungen verhindert werden, sondern auch eine parodontale Abstützung erfolgt. Elastische Verankerungselemente erzeugen dagegen statisch unbestimmte Systeme, die nicht berechenbar sind und somit zur Belastung von Schleimhautbezirken als auch Parodontien führen.

Bekannte Geschiebepassungen des Standes der Technik sind in der US-A-2808648, der US-A-1485306 und der DE-A-1566229 beschrieben. Diese Druckschriften stellen jedoch nicht darauf ab, Kaukräfte durch eine entsprechende Konstruktion von Patrize und/oder Matrize abzufangen, sondern wollen entweder eine besonders zuverlässige oder eine besonders einfache Verbindung von Patrize und Matrize erreichen.

Der Erfindung liegt die Aufgabe zugrunde, eine Geschiebepassung der einleitend genannten Gattung zu schaffen, mit deren Hilfe Kaukräfte sowohl dental- als auch auf dem Kieferkamm (mukosal) abgefangen werden, ohne daß es zu Schäden insbesondere (beim Einsatz von Freiendteilen) an den distalen Kieferteilen und an den marginalen Parodontien der endständigen Ankerzähne kommt.

Die erfindungsgemäße Merkmalskombination ergibt sich aus Anspruch 1. In den abhängigen Ansprüchen 2 bis 9 sind bevorzugte Ausführungsformen beschrieben.

Bei der Erfindung ist die Patrize als Federelement ausgebildet derart, daß sie durch die Kippbewegung in Verbindung mit der Gestaltung der Matrize eine rückstellende Federkraft erzeugt. Hierfür ist eine schwalbenschwanzförmige Ausbildung des Patrizenquerschnitts in Verbindung mit einem die Patrize in der Längsrichtung durchlaufenden Federspalt und einer konischen Verjüngung des Matrizenquerschnitts vorgesehen. Dadurch kommt es beim Auftreten von Kippmomenten zu einer Keilwirkung, die zu einer Verengung des Federspaltes führt und analoge Kippbewegungen ermöglicht. Die Spaltverengung geht mit einer steigenden Federkraft einher, die unter Ausnutzung der Keilwirkung zu einer Rückstellung der Patrize bei abnehmendem Kaudruck führt.

In weiterer vorteilhafter Gestaltung des Erfindungsgegenstandes wird vorgeschlagen, im oberen Bereich des Federspaltes eine Bohrung quer zur Längserstreckung der Patrize anzuordnen, um in diese einen Blockierstift hineinschieben zu können, sofern eine Spaltverengung und damit die Ausführung von Kippbewegungen blockiert werden soll.

Ferner ist es von Vorteil, das untere, auf dem Tiefenanschlag der Matrize aufliegende, Ende der Patrize mit einer Rundung zu versehen, um unnötige Kantenpressungen bei Kippbewegungen zu vermeiden.

Weitere den Erfindungsgegenstand vorteilhaft gestaltende Merkmale sind den Ansprüchen zu entnehmen.

Mit der erfindungsgemäß gestalteten Geschiebepassung werden Nachteile, die mit der Verwendung eines Gelenks zwischen dem Retentionsarm und der Patrize einhergehen, vermieden. Die mit beweglichen Verbindungselementen verbundenen Abnutzungen, die dazu führen, daß die ursprüngliche Lagebeziehung zwischen dem Zahnersatz und dem Restgebiß nicht mehr erreicht wird, unterbleibt weitgehend, da die Federwirkung in Verbindung mit dem hochwertigen Material für die verwendeten Paßteile eine außerordentlich lange Standzeit aufweist. Die Federwirkung muß durch die Kaukraft überwunden werden, so daß keine bloße Scharnierwirkung vorliegt, die den Kieferkamm überlasten würde Gleichzeitig werden die Ankerzähne stärker axial - was angestrebt wird - belastet.

In der Zeichnung ist ein Ausführungsbeispiel der Erfindung schematisch dargestellt und nachstehend erläutert.

Es zeigen:
- Figur 1:: Die Seitenansicht einer über eine erfindungsgemäße Geschiebepassung an der Ersatzkrone eines Ankerzahnes befestigte Teilprothese;

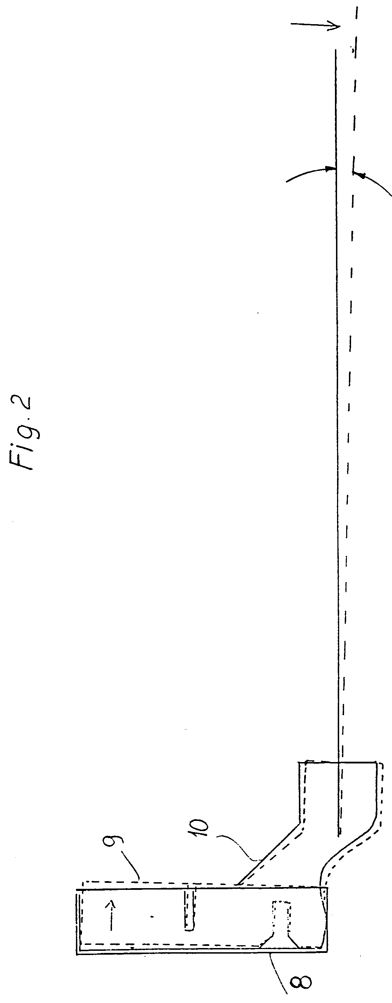

- Figur 2:: die Seitenansicht der Geschiebepassung gemäß Figur 1 in größerem Maßstab;

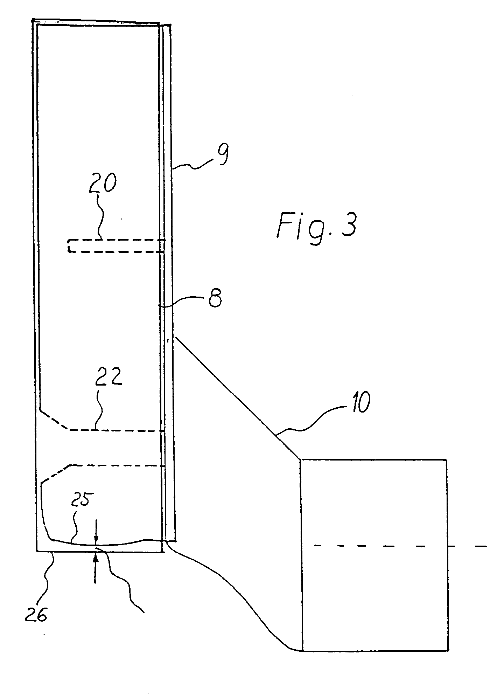

- Figur 3:: die Seitenansicht der Geschiebepassung gemäß Figuren 1 und 2 in Einzelstellung;

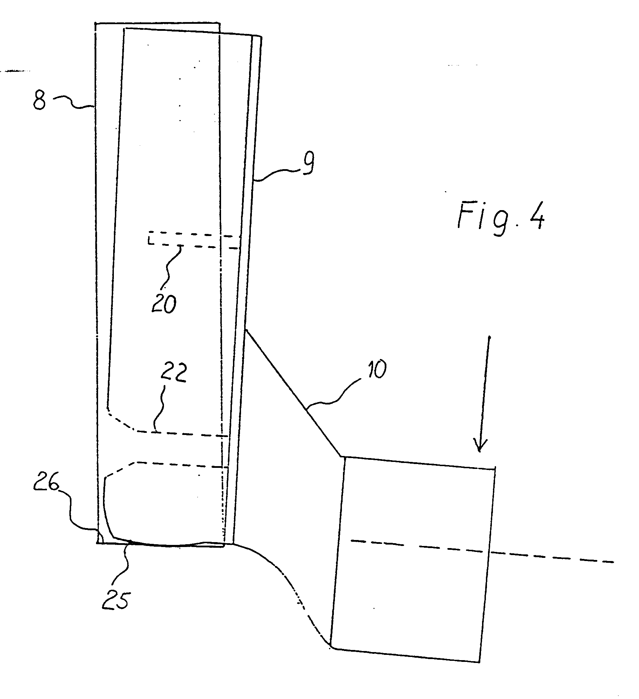

- Figur 4:: die Geschiebepassung gemäß Figur 3 mit geneigter Patrize;

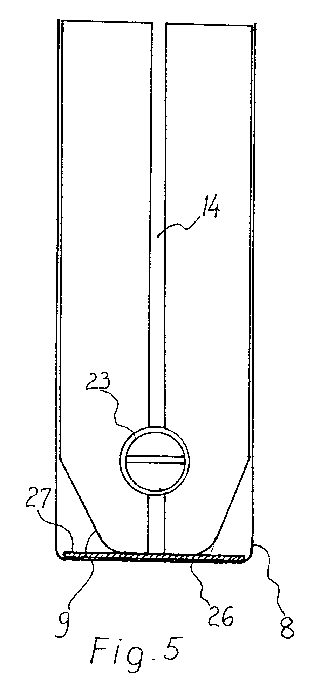

- Figur 5:: die Stirnansicht der Geschiebepassung;
- Figur 6:: die Seitenansicht der Patrize mit eingeschraubter Aktivierschraube und eingeschobenem Blockierstift;
- Figur 7:: die Draufsicht auf die Geschiebepassung in Ruhestellung und
- Figur 8:: die Draufsicht auf die Geschiebepassung mit geneigter Patrize.

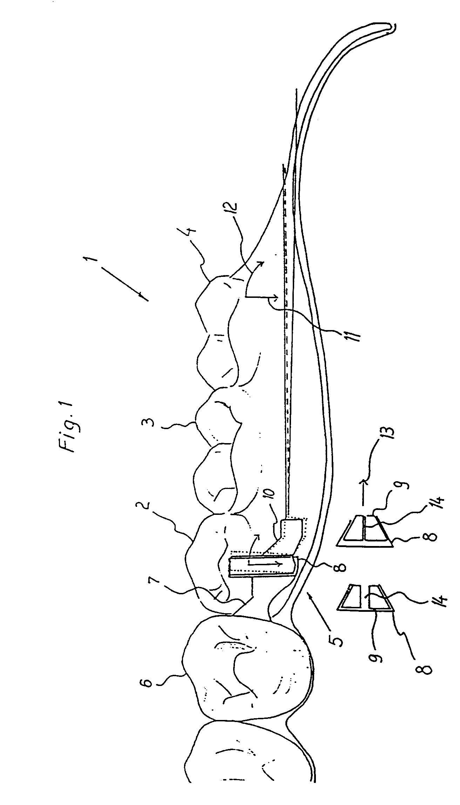

Der mit der Figur 1 dargestellte Prothesensattel 1 ist beispielsweise mit 3 Ersatzzähnen 2, 3 und 4 versehen. Über ein Geschiebe 5 ist eine tragende Verbindung zwischen der Ersatzkrone 6 eines Ankerzahnes mit dem Prothesensattel 1 hergestellt. Zur Übertragung der Kräfte dient der Verbindungssteg 7 zwischen dem Geschiebe 5 und der Ersatzkrone 6.

Das Geschiebe besteht aus einer Matrize 8 und einer in diese einschiebbaren Patrize 9. Sie weist einen Retentionsarm 10 zur Befestigung des Prothesensattels durch eine der üblichen Verbindungsarten wie Kleben, Löten, Splinten und dergleichen auf.

Durch die Kaudruckbelastung führt der Prothesensattel eine axiale, d.h. in Längsrichtung der Matrize gerichtete Bewegung 11 in Verbindung mit einer Drehbewegung 12 aus sobald die Patrize am Tiefenanschlag anliegt. Die Drehbewegung führt zu einem Kippen der Patrize. Die transversale Komponente der Drehbelastung wird zwar ebenfalls auf den Ankerzahn 6, jedoch durch die federnde Ausbildung der Patrize gedämpft übertragen.

Unterhalb der Hauptdarstellung in Figur 1 ist schematisch die Bewegung der Patrize 9 aus ihrer Ausgangsstellung in die gekippte Endstellung verdeutlicht. Der Federspalt kann sich bis zur Anlage der Spaltwände aneinander verengen und den maximalen Neigungswinkel der Kippbewegung in Verbindung mit der Größe des Keilwinkels 15 des Schwalbenschwanzes 16 und der Seitenwände 17 der Matrize 8 begrenzen.

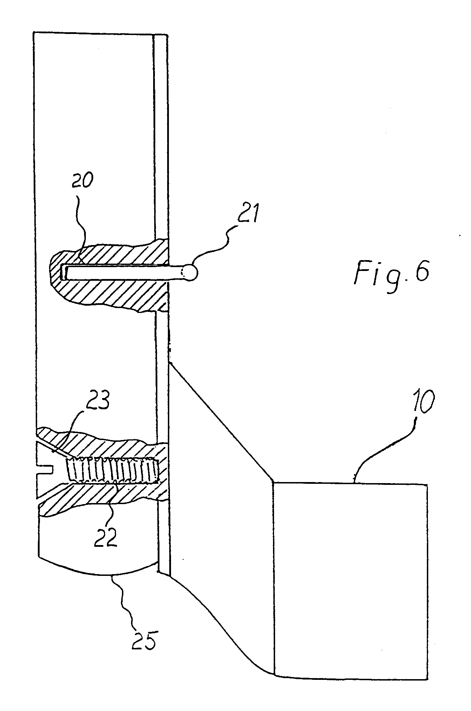

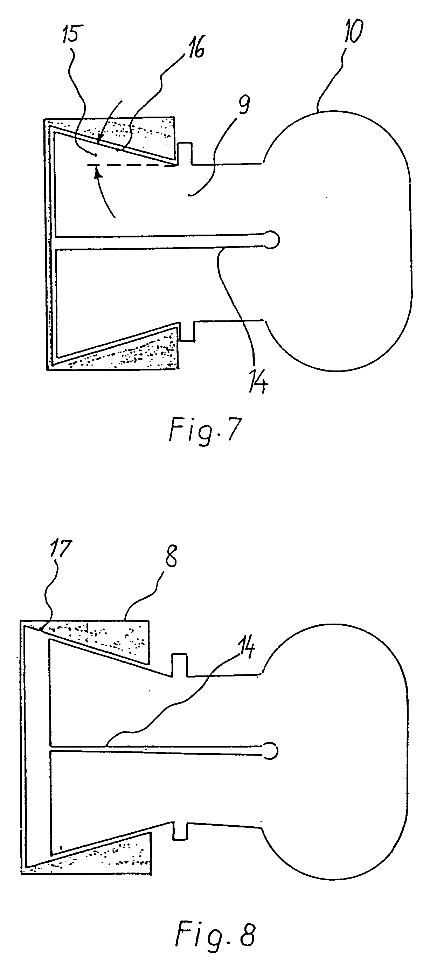

Zur Blockierung von Kippbewegungen kann die Patrize zusätzlich mit einer Querbohrung 20 zur Aufnahme eines Blockierstiftes 21 versehen sein. Durch einen eingeschobenen Blockierstift ist die Patrize nicht mehr in der Lage, sich federnd zusammendrücken zu lassen, so daß sie auch beim Auftreten von Kaukräften ihre Ausgangslage beibehält (Figur 6,7). Ferner ist eine Gewindebohrung 22 zur Aufnahme einer Aktivierschraube 23 vorgesehen, deren Position mehr oder weniger weit in die Patrize greifend der Einstellung einer gewünschten Reibpassung zwischen Matrize und Patrize nach der Fertigstellung der Prothese dient.

Vorzugsweise ist das innere Ende der Patrize mit einer Rundung 25 versehen, um ein einfaches, reibungsarmes Abwälzen auf dem Tiefenanschlag bzw. dem Boden 26 der Matrize zu gewährleisten.
Eine sehr dünnwandige Unterlegscheibe 27 zwischen dem Boden 26 der Matrize und dem inneren Ende der Patrize aus einem geeigneten Metall oder aus einem elastomeren Material dient der Einhaltung eines geringen Bodenspiels. Eine Unterlegscheibe aus Metall wird nach der Fertigstellung entfernt. Sollte die Verwendung eines elastomeren Materials für die Unterlegscheibe bevorzugt werden, kann diese auch nach der Fertigstellung in ihrer Position verbleiben.

Durch den Federspalt 14 in Verbindung mit der Keilwirkung der konischen Seitenwände 17 der Matrize 8 werden die beiden durch den Federspalt gebildeten Schwalbenschwanzteile gegeneinandergedrückt, d.h., sie können bis zur Anlage der Spaltwände aneinander einwärts ausweichen. Dieses Ausweichen ist mit einer zunehmenden Rückstellkraft der Patrize verbunden, die dazu führt, daß nach dem Rückgang der Kaukräfte die Patrize in ihre Ausgangsstellung rückkehren kann und die Bewegung des Prothesensattels unterstützt. Nicht nur die scharnierartige Bewegung wird erheblich abgeschwächt, sondern auch die auf den Ankerzahn wirkenden Torsionskräfte werden erheblich gedämpft. Der axial gerichtete Kraftanteil drückt die Patrize zunächst bis zum Boden 26 der Matrize einwärts, bevor es zu einer Kippbewegung kommt. Nach einer Entlastung der Patrize kehrt diese unter Rückgewinnung des Spielraumes zwischen dem Patrizenende und dem Matrizenboden vollständig in ihre Ausgangsposition zurück.

Der Blockierstift 21 kann nicht nur spielfrei, sondern auch von einem Freiraum oder Spiel umgeben in die Querbohrung 20 hineinreichen. Während fehlendes Spiel, beispielsweise bei einer Übergangspassung oder leichten Preßpassung zur der vorerwähnten völligen Blockierung der Patrize innerhalb der Matrize führt, wird bei einer Spielpassung eine begrenzte Kippbewegung ermöglicht. Der maximale Neigungswinkel der Patrize wird durch die Größe des gewählten Bohrungsübermaßes bestimmt.

## Patentansprüche

1. Geschlossene Geschiebepassung zur lösbaren Verbindung eines herausnehmbaren Zahnersatzes mit dem Restgebiß zur parodontalen Abstützung, insbesondere zur Verankerung einer Freiendprothese an der Ersatzkrone eines Ankerzahnes, mit einer Matrize und einer in diese einschiebbaren Patrize, wobei die Patrize (9) zur Ausführung begrenzter rückstellbarer Kippbewegungen innerhalb der Matrize (8) federnd ausgebildet ist und durch die Kippbewegung eine rückstellende Federkraft erzeugt, dadurch gekennzeichnet, daß der Querschnitt der Patrize schwalbenschwanzförmig ausgebildet und mit einem in Patrizenlängsrichtung verlaufenden Federspalt (14) versehen ist, der durch die Keilwirkung einer analogen konischen Verjüngung des Matrizenquerschnitts und in Abhängigkeit von der Neigung der Patrize an seinem äußeren Ende vollständig schließbar ist.

2. Geschiebepassung nach Anspruch 1, dadurch gekennzeichnet, daß im oberen Bereich des Federspaltes eine Querbohrung (20) zur Aufnahme eines Blockierstiftes (21) vorgesehen ist, der in den Federspalt hineinschiebbar ist.

3. Geschiebepassung nach Anspruch 1 oder 2, dadurch gekennzeichnet, daß das untere, am Tiefenanschlag der Matrize anliegende Ende der Patrize mit einer Rundung (25) versehen ist.

4. Geschiebepassung nach einem der Ansprüche 1 bis 3, dadurch gekennzeichnet, daß die Patrize im unteren Bereich zusätzlich mit einer Stellschraube (23) versehen ist, die zur Justierung der Reibpassung in den Federspalt greift.

5. Geschiebepassung nach einem der Ansprüche 1 bis 4, dadurch gekennzeichnet, daß der Federspalt an seinem inneren Ende in eine Rundung mit definierter Krümmung übergeht.

6. Geschiebepassung nach einem der Ansprüche 1 bis 5, dadurch gekennzeichnet, daß zur Einstellung eines Spiels (28) zwischen das innere Ende der Patrize und den Tiefenanschlag (Boden) der Matrize eine folienartig dünne Unterlegscheibe (27) schiebbar ist.

7. Geschiebepassung nach Anspruch 6, dadurch gekennzeichnet, daß die Unterlegscheibe aus Metall besteht.

8. Geschiebepassung nach Anspruch 6, dadurch gekennzeichnet, daß die Unterlegscheibe aus einem elastomeren Material gefertigt ist.

9. Geschiebepassung nach Anspruch 2, dadurch gekennzeichnet, daß den Blockierstift (21) in der Querbohrung (20) ein Freiraum (Spiel) umgibt, der die Verengung des Federspalts (14) und dementsprechend die maximale Neigung der Patrize bei der Aufnahme von Kaukräften begrenzt.

## Claims

1. Hinged sliding attachment for the detachable connection of a removable denture with the residual teeth for peridental support, particularly for anchoring a free end prosthesis to the replacement crown of an anchor tooth, with a matrix and a patrix slidable into the latter, the patrix (9) being resiliently constructed for performing limited restorable tilting movements within the matrix (8) and a restoring spring tension is produced by the tilting movement, characterized in that the cross-section of the patrix is dovetail-shaped and is provided with a spline (14) running in the patrix longitudinal direction, which as a result of the wedge effect of an identical conical taper of the matrix cross-section and as a function of the inclination of the patrix at its outer end can be completely closed.

2. Hinged sliding attachment according to claim 1, characterized in that in the upper area of the spline is provided a cross-hole (20) for receiving a blocking pin (21), which can be slid into the spline.

3. Hinged sliding attachment according to claim 1 or 2, characterized in that the lower end of the patrix engaging on the depth stop of the matrix is provided with a rounding (25).

4. Hinged sliding attachment according to one of the claims 1 to 3, characterized in that the lower area of the patrix is additionally provided with a setscrew (23) engaging in the spline for adjusting the friction fit.

5. Hinged sliding attachment according to one of the claims 1 to 4, characterized in that at its inner end the spline passes into a rounding with a clearly defined curvature.

6. Hinged sliding attachment according to one of the claims 1 to 5, characterized in that for adjusting a clearance (28) between the inner end of the patrix and the depth stop (bottom) of the matrix a foil-like, thin shim (27) can be slid.

7. Hinged sliding attachment according to claim 6, characterized in that the shim is made from metal.

8. Hinged sliding attachment according to claim 6, characterized in that the shim is made from an elastomeric material.

9. Hinged sliding attachment according to claim 2, characterized in that the blocking pin (21) in the cross-hole (20) is surrounded by a free space (clearance), which limits the narrowing of the spline (14) and correspondingly the maximum inclination of the patrix on absorbing masticatory forces.

## Revendications

1. Attache à coulisse fermée servant à relier de manière amovible une prothèse dentaire extractible avec le reste de la dentition à titre de soutien parodontal, en particulier pour l'ancrage d'une prothèse dentaire en porte-à-faux à la couronne de remplacement d'une dent pivot, comportant une matrice et un poinçon pouvant être introduit dans celle-ci, le poinçon (9) ayant une structure élastique permettant l'exécution de mouvements de basculement réversibles limités à l'intérieur de la matrice (8) et exerçant du fait du mouvement de basculement une force de rappel élastique, caractérisée en ce que la section du poinçon est en forme de queue d'aronde et est pourvue d'une fente élastique (14) orientée dans le sens longitudinal du poinçon, qui peut se fermer entièrement à son extrémité extérieure sous l'effet de coin d'un rétrécissement conique analogue de la section de la matrice et en fonction de l'inclinaison du poinçon.

2. Attache à coulisse suivant la revendication 1, caractérisée en ce que, dans la partie supérieure de la fente élastique, on prévoit un alésage transversal (20) pour recevoir une broche de blocage (21), qui peut être insérée dans la fente élastique.

3. Attache à coulisse suivant la revendication 1 ou 2, caractérisée en ce que l'extrémité inférieure du poinçon, reposant contre la butée de profondeur de la matrice, est pourvue d'un arrondi (25).

4. Attache à coulisse suivant une des revendications 1 à 3, caractérisée en ce que l'extrémité inférieure du poinçon est en outre pourvue d'une vis de réglage (23), qui pénètre dans la fente élastique afin de régler l'ajustement de serrage.

5. Attache à coulisse suivant une des revendications 1 à 4, caractérisée en ce que la fente élastique présente à son extrémité intérieure un arrondi ayant un rayon de courbure défini.

6. Attache à coulisse suivant une des revendications 1 à 5, caractérisée en ce qu'on peut glisser une rondelle mince en forme de film (27) afin de régler un jeu (28) entre l'extrémité intérieure du poinçon et la butée de profondeur (fond) de la matrice.

7. Attache à coulisse suivant la revendication 6, caractérisée en ce que la rondelle est en métal.

8. Attache à coulisse suivant la revendication 6, caractérisée en ce que la rondelle est fabriquée dans un matériau élastomère.

9. Attache à coulisse suivant la revendication 2, caractérisée en ce qu'un espace libre (jeu) entoure la broche de blocage (21) dans l'alésage transversal (20) et limite le rétrécissement de la fente élastique (14) et de manière correspondante l'inclinaison maximale du poinçon lors de l'absorption de forces de mastication.
